# EUROPEAN PATENT SPECIFICATION

(11) **EP 0 773 669 B1**
(45) Date of publication and mention of the grant of the patent: **12.01.2000**
(21) Application number: 96870133.4
(22) Date of filing: 29.10.1996
(51) Int. Cl.: H04N 3/15, H04N 5/217

(54) **Circuit, pixel, device and method for reducing fixed pattern noise in solid state imaging devices**
Schaltung, Bildelement, Vorrichtung und Verfahren zur Verminderung des Rauschens örtlich unveränderlicher Muster in Festkörperbildaufnahmevorrichtungen
Circuit, élément d'image, dispositif et méthode pour la réduction du motif de bruit fixe dans des dispositifs de prise d'images à l'état solide

(30) Priority: 31.10.1995 US 7087; 05.03.1996 EP 96870025; 19.09.1996 US 26345
(43) Date of publication of application: 14.05.1997
(73) Proprietor: INTERUNIVERSITAIR MICRO-ELEKTRONICA CENTRUM VZW, 3001 Heverlee (BE)
(72) Inventor: Dierickx, Bart, 2640 Mortsel (BE)
(74) Representative: Van Malderen, Michel

(56) References cited:
- EP-A- 0 657 863
- US-A- 4 580 103
- US-A- 5 296 696
- US-A- 5 321 528
- W.J.MARTIN ET AL.: "DYNAMIC OFFSET NULL" IBM TECHNICAL DISCLOSURE BULLETIN, vol. 23, no. 9, February 1981, pages 4195-4196, XP002052268

## Description

### FIELD OF THE INVENTION

The present invention relates to solid state imaging devices being manufactured in a CMOS- or MOS-technology. More particularly, an amplifying circuit and a method for eliminating fixed pattern noise in the output signal of a pixel or of an image sensor are disclosed.

### BACKGROUND OF THE INVENTION AND PROBLEM DEFINITION

Solid state image sensors are well known. Commonly solid state image sensors are implemented in a CCD-technology or in a CMOS- or MOS-technology. Solid state image sensors find a widespread use in camera systems. In this embodiment a matrix of pixels comprising light sensitive elements constitutes an image sensor, which is mounted in the camera system. The signal of said matrix is measured and multiplexed to a so-called video-signal.

CCD-based camera systems have less noise fluctuations in the image compared to CMOS- or MOS-based camera systems. Therefore CCD-based camera systems are nowadays preferred in applications wherein a high image quality is required such as video or still camera applications. Due to the further miniaturisation of the CMOS electronics technology, it is possible to realise complex CMOS- or MOS-based pixels as small as CCD-based pixels. It is a further advantage of CMOS- or MOS-based pixels that CMOS is a technology being offered by most foundries whereas CCD-technology is rarily offered and a more complex and expensive one.

Of the image sensors implemented in a CMOS- or MOS-technology, CMOS or MOS image sensors with passive pixels and CMOS or MOS image sensors with active pixels are distinguished. An active pixel is configured with means integrated in the pixel to amplify the charge that is collected on the light sensitive element. Passive pixels do not have said means and require a charge-sensitive amplifier that is not integrated in the pixel and is connected with a long line towards the pixel. For this reason, active pixel image sensors are potentially less sensitive to noise fluctuations than passive pixels. Due to the additional electronics in the active pixel, an active pixel image sensor may be equipped to execute more sophisticated functions, which can be advantageous for the performance of the camera system. Said functions can include filtering, operation at higher speed or operation in more extreme illumination conditions. It remains however a main drawback of active pixel CMOS or MOS image sensors, hampering their use in applications requiring a high image quality, that their output signal has an additional non-uniformity caused by the statistical spread on the characteristics of the electronic components composing the active pixel. An example of such characteristic being subject to manufacturing process variations is the threshold voltage of MOS transistors integrated in the pixel. If no precautions are taken, this non-uniformity, called fixed pattern noise or FPN, is seen as a "snow-like" shade over the image being taken with a CMOS or MOS image sensor with active pixels.

**Document US-A-4274113** discloses a solid state imaging device having a sensor portion and a signal processing circuit. Said signal processing circuit comprises means to eliminate fixed pattern noise. In this device the charge collected on a passive pixel is measured on a common charge amplifier. The pixel is sampled two times consecutively, and the difference of charges is constituting the signal. The first sampling is taken with the pixel not connected to the output, the second sampling is taken with the pixels connected to the output for a short time, so that the charge is integrated in the output. This method to eliminate FPN however is not suited for active pixels which have not a charge output, but which have a voltage output or current output or similar. Also, as disclosed in the preferred embodiment of US-4274113, reading charge over a large bus with high capacitance deteriorates the temporal noise in the final sensor image.

**Document US-A-4809074** discloses a solid state imager having a signal processing circuit for reducing noise, in particular FPN. Each pixel has two switches, which makes it possible to read a pixel charge with less noise and FPN than in pixels with only one switch. The FPN cancellation is performed by reading twice the charge on the output node. Again, the method disclosed in this patent is not suited for active pixel imaging sensors.

The patent application **WO92/16999** discloses a circuit for minimising the variation in characteristics across different parts of an imaging device caused by manufacturing process variations between a plurality of inverting amplifiers in said imaging device. Said circuit comprises at least one transistor connected in series with a power supply terminal on each of the inverting amplifiers so as to provide a new reference level for each inverting amplifier whereby the switching threshold of the inverting amplifier is controllable by a voltage applied to a control input connection of said transistor. This method applies only for an imaging device with passive pixels.

**Document EP-A-0665685** discloses an active pixel image sensor. This patent describes a method to cancel non-uniformity of the pixel response. This method is based on the fact that all pixels outputs are fed through switches and column/row buses to a common output, without passing trough intermediate (column) buffers. This method is viable, but it requires the output stage of every individual pixel to be powerful enough to drive the buses/output lines at a high readout speed. The proposed method furthermore adds additional fixed pattern noise by the multiplexing structures.

**Document US-A-4 580 103** discloses an amplifying circuit for amplifying an input ac signal thereby aiming to eliminate the offset present in the input ac signal and thereby amplifying the inherent input amplifier offset with a gain of about unity. The circuit as disclosed in D1 does not remove the inherent offset of the amplifier (amplifying element) of the amplifying circuit but reduces this offset influence on the output signal by amplifying the input signal more strongly and holding the gain of the offset at a factor of about one. Thus the offset errors induced by the amplifying element are reduced but remain.

**Document IBM TDB, Vol. 23, No. 9, pp. 4195-4196** discloses an amplifier circuit that introduces means for reducing offset error voltages of amplifiers in the circuit. The offset error is reduced but is not suppressed; moreover one can note that the output voltage of the amplifying circuit is influenced by the offset of one of the amplifiers. The amplifier circuit furthermore can not be forced to an externally predetermined uniform offset correction.

**Document US-A-5 321 528** provides an image sensor chip which includes means for generating a signal allowing the offset voltage within a chip to be separated and compensated for by another circuit wherein the chip is later integrated. Thus a signal can be generated that excludes an image signal but includes an offset level. The further processing of such signal is to occur on an image sensor per image sensor basis.

**Document US-A-5 296 696** discloses an amplifier circuit for reducing Fixed Pattern Noise (FPN) in an image taken with a pixel array, the FPN being caused by the imaging circuit. The amplifier circuit however introduces an offset caused by the amplifying element 16. Thus there will remain a source of FPN in the final image caused by the amplifying element and this FPN will be different for at least each column of a pixel array.

### SHORT SUMMARY OF THE INVENTION

The present invention discloses a device such as an image sensor which permits to reduce fixed pattern noise (FPN) which is invariant in time, without introducing noise of other origin. This device comprises a matrix of active pixels as well as electronic components or circuits located by preference at the edges or border of the matrix of pixels. At the expense of forming an image sensor with an unusual large area, said electronic components or circuits can also be integrated in said pixels. Said electronic components or circuits comprise at least one amplifying circuit which is common to a group of pixels such as a column or a row in said matrix. Furthermore, said device has an output line that is preferably common to said matrix. The amplifying circuit comprises an amplifying element and a memory element that are connected to circuitry that is provided to change the signal in the output terminal of said amplifying element to a known level, and to store the corresponding level, or a measure thereof, in the control terminal of said amplifying element on said memory element.

The active pixels are adapted for being brought in a state corresponding to an amount of radiation collected on said pixel, and can therefore be changed in to a first state. It is required that this first state can be compared to a second state that is different. Said first state can correspond to an amount of collected radiation or light on the radiation or light sensitive element in said pixel. Said first state can also correspond to the reset state of the pixels or to a non-illuminated or dark condition of the pixel. Said second state can correspond to a non-illuminated or dark condition of the pixel, or to an amount of collected radiation or light on the radiation or light sensitive element in said pixel, or to the reset state of the pixel.

Preferably, the amplifying element is a transistor and more particularly of the type of metal oxide semiconductor transistors wherein said output terminal is the source or the drain of the transistor and wherein the control terminal is the gate of said transistor. It also can be a more complex amplifier in its own. The memory element is preferably a capacitor or a nonvolatile memory element as used in ROMs, EPPROMs, EEPROMs, or flash EEPROMs.

In a first aspect of the present invention, an amplifying circuit is disclosed, comprising:
- an amplifying element having an output terminal and a control terminal, and said amplifying element including a transistor;
- a memory element;
and being characterised in that said amplifying circuit further comprises means for forcing **an externally predetermined offset correction voltage directly on the output terminal of said amplifying element,** and for adjusting a corresponding voltage level on the control terminal of said amplifying element, said corresponding voltage level being determined by said predetermined voltage and by said means, and said means further having a part for storing on said memory element said corresponding voltage level or a measure of said corresponding voltage level.

Preferably, said externally predetermined voltage is directly forced on the output terminal through a switch or a resistor or a current source or a device that can keep the output terminal at said predetermined voltage.

Preferably, said memory element is an analog memory element or a non-volatile memory element as used in analog EPROMS, EEPROMS or flash EEPROMS, and more particularly a capacitor.
Preferably, the means mentioned hereabove are adjusting/forcing circuits.

According to a preferred embodiment, a predetermined voltage level is directly applied on said output terminal and wherein said corresponding voltage level is indirectly adjusted on the control terminal of said amplifying element by circuit functioning of said means. Preferably, said amplifying element is a transistor, said output terminal being the source or drain of said transistor, and said control terminal being the gate of said transistor. Said transistor is preferably a transistor of the type of metal oxide semiconductor transistors.

In a second aspect of the present invention, a pixel, adapted for integration in an imaging device, comprising the amplifying circuit as hereabove described and further comprising a radiation sensitive element is disclosed.

According to a preferred embodiment, said pixel further comprises an AC-coupled amplifier with a capacitive feedback circuit in between said amplifying element and said memory element.

According to another preferred embodiment, said pixel has an amplifying element with a first terminal being connected to said photosensitive element and a control terminal being connected to said memory element, a second terminal of said amplifying element being connected through a capacitor with said first terminal.

In a third aspect of the present invention, a device for imaging applications comprising the amplifying circuit as hereabove described is disclosed. Said device comprises:
- a matrix of active pixels arranged in a geometric configuration, said pixels yielding electrical signal outputs generated by photoelectric conversion, and being adapted for being brought in a state corresponding to an amount of radiation collected on said pixels;
- at least one amplifying circuit being common to a group of pixels of said matrix; and
- an output line being common to the matrix of pixels.

Preferably, said matrix is arranged in columns and rows and wherein each amplifying circuit is common to a group of pixels such as a column or a row in said matrix. Preferably, said predetermined level is common for essentially all columns of said matrix.

In a fourth aspect of the present invention, a method is disclosed for eliminating fixed pattern noise which is invariant in time, in the output signal of an image sensor, making use of said device.

The method is as follows:
- reading out the signal of a pixel in a first state while forcing **directly an externally predetermined offset correction voltage on the output terminal of an amplifying element,** thereby defining a corresponding voltage level on the control terminal of said amplifying element and storing said corresponding voltage level or a measure thereof on a memory element that is connected to said pixel, and thereby defining a first voltage at the output of said amplifying element;
- subtracting said first voltage at the output of said amplifying element of a second voltage at the output of said amplifying element, said second voltage being defined by the output signal of the same pixel in a second state and said second voltage including the voltage level stored on said memory element, whereby the output voltage of the amplifying element shifts proportionally to the difference of the signal of said pixel in said first and said second state;
- transferring the subtracted signal to an output line that is common for said group; and
- repeating this operation for all or part of pixels of the imaging device.

Preferably, said externally predetermined voltage is directly forced on the output terminal through a switch or a resistor or a current source or a device that can keep the output terminal at said predetermined voltage.

Preferably, said first and second state of said pixel are read out consecutively. More preferably, said first state or said second state corresponds to an amount of radiation or light collected on the light sensitive element in said pixel or to the dark condition of said pixel or to the reset state of said pixel. Said predetermined output voltage level is derived from a supply voltage of said solid state imaging device.

The voltage level stored in the memory element includes preferably the offset voltage of said amplifying element.

In a fifth aspect of the present invention, the use is disclosed of said imaging device and said method in camera systems and in imaging applications requiring a high image quality. An example of such camera system is a video or still camera or a camera integrated in a multimedia device such as a Personal Computer equipped with video functionality or with video and speech functionality.

### DETAILED DESCRIPTION OF THE DRAWINGS

- **Figure 1**: shows an example of an active pixel containing three transistors, and a photodiode that can be used in the present invention.
- **Figure 2**: shows an embodiment of the device for imaging applications according to the present invention.
- **Figure 3**: shows three amplifiers that can be integrated as components (11), (61), (103), (111), (123) in the device for imaging applications according to the present invention.
- **Figure 4**: shows current sources that can be used in the column amplifiers of the device for imaging applications according to the present invention.
- **Figure 5**: shows another embodiment of the device for imaging applications according to the present invention.
- **Figure 6**: shows two pixels of a structure that could be part of an array shown in figure 2 or 5.
- **Figure 7**: schematically shows the timing diagram of the method for eliminating fixed pattern noise in a solid sate imaging device according to the present invention.
- **Figure 8**: shows an embodiment (further referred to as ACI) of the present invention with the amplifying circuit in connection with a photosensitive element.
- **Figure 9**: shows a prior art amplifying circuit
- **Figure 10**: shows another embodiment (further referred to as AR) of the present invention with the amplifying circuit in connection with a photosensitive element.
- **Figure 11**: shows a differential amplifier with similar use as the amplifiers of figure 3.
- **Figure 12**: shows another embodiment (further referred to as ARI) of the present invention with the amplifying circuit in connection with a photosensitive element.

### DETAILED DESCRIPTION OF PREFERRED EMBODIMENTS OF THE PRESENT INVENTION

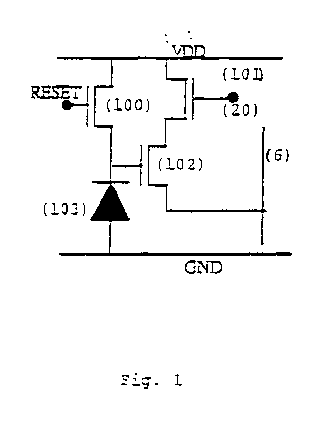

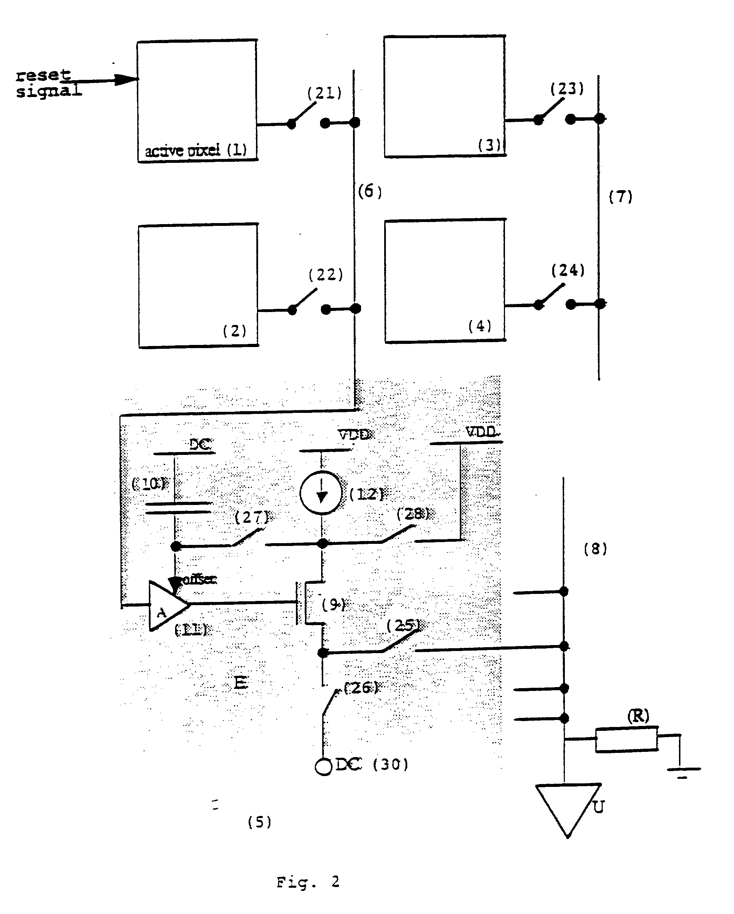

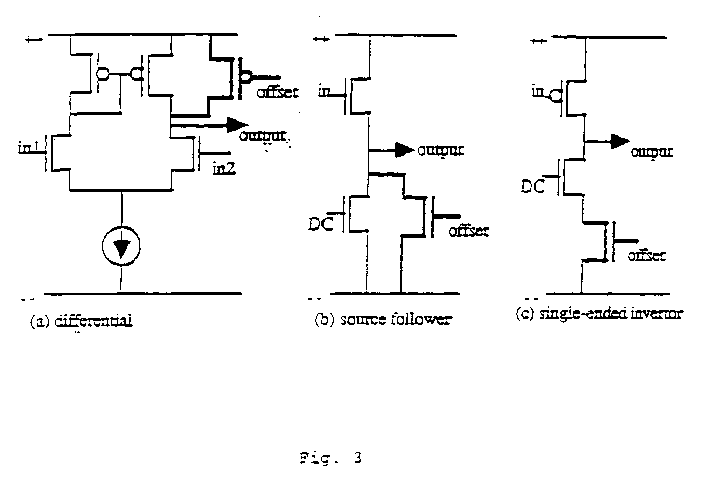

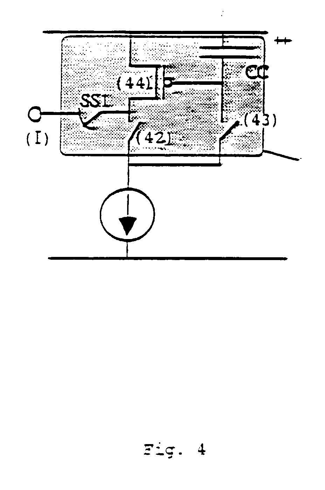

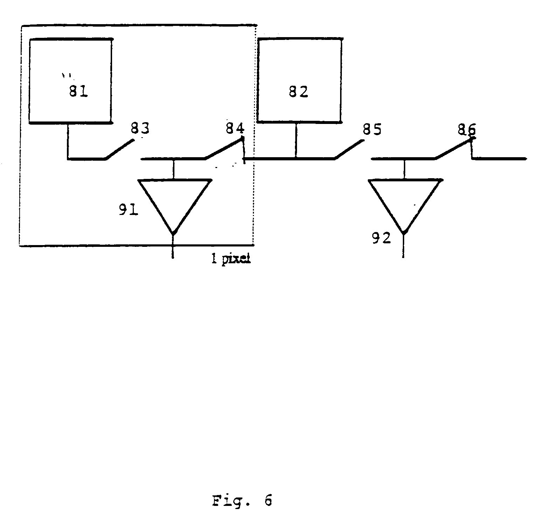

In the sequel and for the purpose of teaching only an implementation of the image sensor as a sensor with nxm pixels in a double metal, single poly 0.7 µm CMOS process can be assumed. The size of such image sensor with 384x288 pixels is 6,3x5,7 mm. The dimensions of the light sensitive elements in the photodiodes of the pixels are 14x14 µm. Photodiodes of this size generate currents of about 1 nA at light illumination level of lmW/cm². It is obvious that these numbers represent only one option within the art and that many other implementations will be evident for those skilled in the art. An example of an active pixel (1) containing three transistors (100),(101),(102) and a photodiode (103) that can be used in the present invention is shown in figure 1. Switch (20) and line (6) have the same function as the parts (21),(23),(71),(73), and (6),(56) respectively in the figures 2 and 5. A pulsed signal on gate "RESET" will zero the accumulated charges on the photodiode node (103), i.e. its forces the pixels in a "reference state".

A device to readout active pixels or parts of an imager with active pixels is the scheme represented in figure 2. In this figure an arbitrary array of 2 by 2 active pixels (1),(2),(3),(4) is drawn with one column amplifier (in this text also referred to as the amplifying circuit) (5). Said column amplifier (5) may as well be integrated within each pixel (1),(2),(3),(4), so as to form a more elaborate active pixel in its own, at the cost of area. This integration may be a preferred option for imaging devices and for a sensor device for non-optical applications which are arranged in a fashion which is not row/column wise, for instance, linear image sensor.

The output signal of an active pixel (1),(2),(3),(4) is via an optional switch (21),(22),(23),(24) read out over a line (6), (7) and is passed to a common output bus (8) via an optional switch (25). Non-uniformities of different signals on the different lines (6) and (7) of different such column amplifiers (5) are compensated at the output bus (8). The relative offsets of the input signals (6) and (7), including the offset non-uniformity induced by the output transistor (in this text also referred to as the amplifying element) (9) itself, is compensated by adjusting an offset compensation input of a second amplifier (11). This adjustment or calibration is carried out while forcing the active pixel that is being read out, or the signal on line (6) or (7) in general, to a reference state.

For adjustment or calibration, switches (27) and (26) are closed. The Source of transistor (9) is thus forced to a known voltage (30). This known voltage (30) can be a supply voltage of the imaging device and is preferably common for all columns of the matrix of pixels. With appropriate circuit components and applied voltages and currents, which are straightforward for those skilled in the art, the voltage at the drain and gate of the transistor (9) will settle to an equilibrium value. One can predict the behavior of such circuits by the use of analog circuit simulators such as HSpice, commercialized by the company Metasoft. The offset needed to accomplish the equilibrium is stored in an analog memory which is represented as a capacitor (10) and a switch (27). Other ways to implement analog memory, known to the man skilled in the art, can be used for this purpose too. For the normal read out operation, the switches (27) and (26) are opened. Switch (28) is closed to allow for a large supply current for transistor (9). The optional switch (25) is used for each column amplifier (5) separately to connect to the bus (8) in sequential or in a random addressed manner.

The multiplexing done in this way through switch (25) may as well be accomplished in different ways.

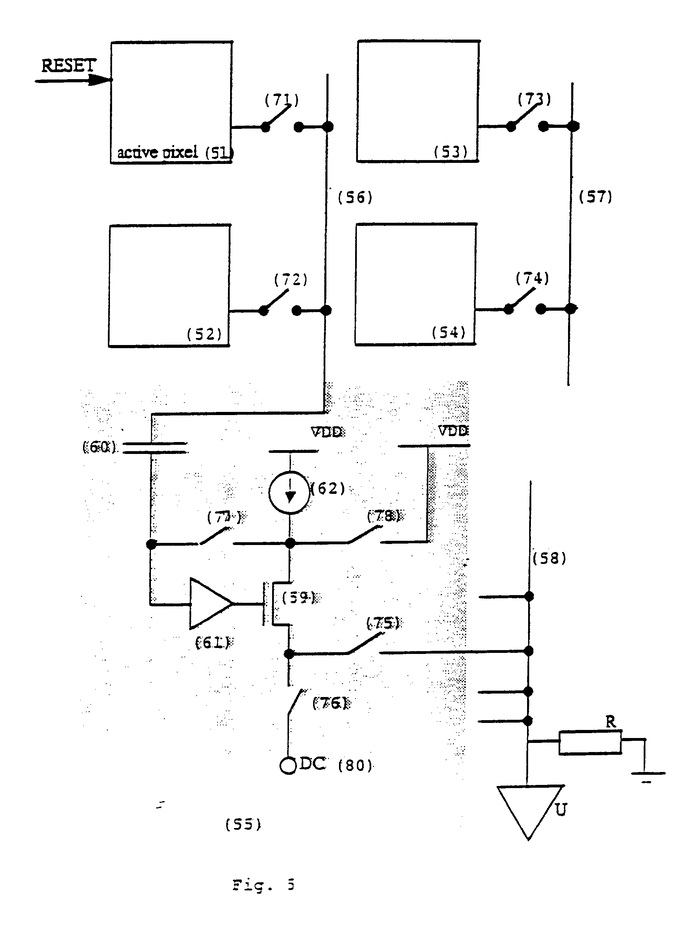

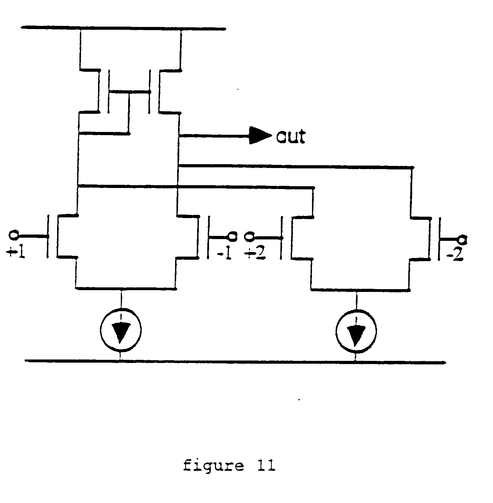

The transistor (9) is preferably a MOSFET, but other types of active elements like bipolar transistors or thyristors, or JFETs are also appropriate. The second amplifier (11),(61) in figures 2, 5 respectively is generic. Many known types of amplifiers can be used for this purpose, as long as there is provided means to adjust their offset voltage by an external voltage or current. Three of such second amplifiers, according to the art are shown in figure 3, with an offset adjusting means drawn in thick lines. The amplifier of figure 11 can be used for the same purpose. Note that the offset adjusting input is a voltage input in each of these cases. However, the input device is a MOSFET used as current source, so an input current could be applied as offset means directly as well. Note also that the second input of a two-input amplifier in itself can be considered also as an offset adjusting input, and can be used for that purpose.

The second amplifier (11) is not necessarily a unity amplifier. It may include also a filter function to improve e.g. signal to noise ratio. The use of a source follower transistor for second amplifier (11) is a simple and straightforward implementation.

The capacitor (10) in figure 2 is a means for analog memory. Other types of analog memory may be used instead, e.g. based on techniques used for the fabrication of non-volatile memories (ROM, EPROM, EEPROM), known to those skilled in the art. Analog memory can also be implemented by a combination of ADC and DAC and digital memory.

The current source (12) may be implemented in well-known ways, as e.g. a MOSFET with a voltage at the gate. In this way however, the currents of different column amplifiers (5) will have different values due to non-uniformities of the electronic devices. This non-uniformity of the currents will have second order effects on the uniformity of the final outputs on the bus (8). One can implement means to obtain more uniform or reproducible current sources (12). Those skilled in the art are aware about many such methods been devised in the past, e.g. for the fabrication of analog-digital convertors or digital-analog convertors.

One method consists in the use of one single current source for all said column amplifiers in the imaging array. The said single current source is applied to all column amplifiers in turn by means of switches.

Another method consists of the calibration of the current sources which are residing in each column amplifier during those time intervals that these currents are not in use: e.g. during the time that switch (28) in figure 2 is closed. This can be accomplished by a circuit configuration as depicted in figure 4. The output (I )of this subcircuit is the current source (12) depicted in figure 2. The switches (42) and (43) serve to connect and calibrate the MOSFET (44) for a known current level. Another method is the use of circuit components which are not MOSFETs and thus suffer less from non-uniformities, as resistors, Bipolar transistors or JFETs.

An implementation of the imaging device according to another preferred embodiment of the present invention is shown in figure 5. A matrix of 2 x 2 active pixels is drawn. Every pixel (51),(52),(53),(54) can, via a switch (71),(72), (73),(74), impose its output signal to the column lines (56),(52).

A pixel can be switched in its reference state, e.g. via a "reset signal" (this is a common but not exclusive way to do such).

During the first of the two states, switches (77) and (76) are closed, and (78) and (75) remain open. The current source (62) delivers a small fixed current. For this reason, the source of MOSFET (59) comes to a fixed potential, and the gate of this MOSFET is forced to an equilibrium value. This value is memorised on the capacitor (60). The amplifier (61) at the gate of the MOSFET is not absolutely necessary, it may be shunted.

The possibly unwanted offset of the pixel signal stands now over the capacitor (60).

Before the second phase, the switches (77) and (76) are opened, and (78) and (75) potentially too are closed. Consequently, on the source of the MOSFET (59) appears the signal that was there already during the first phase, except from a small fixed shift. This signal is offered to the common output amplifier "U" of the imaging device, which does not contribute to the FPN because it is common to the whole matrix.

During the second of the two states of the active pixel, the signal on line (56) changes. But this new signal contains the unwanted offset either via the capacitor (60) the change of this signal is applied to the gate of transistor (59), and when (75) is closed, to the output amplifier of the imaging device.

Many column amplifiers are in parallel on the output bus (58). One can then scan these amplifiers by activating their respective switches (75).

We draw the attention to the fact that the circuit in figure 5 is a special case of the circuit in figure 2. The combination of (60) and (61) in figure 5 is a second amplifier with AC-coupled input. This too is to be considered as an amplifier with offset adjustment terminal. The real input and the offset input are at both end of the said capacitor (60).

In fact the variant of the circuit in figure 2, where amplifier (11) is just a short circuit, thus the said combination of (60) and (61) being only a capacitor, should be considered for this reason as trivial case of an amplifier with offset correction too. This may be sufficient for the required functionality.

Other embodiments of the present invention are described in the sequel.

The active pixels to be used with this type of readout must obey only to one criterium, that they can be set in two or more different states, corresponding to different amounts of collected light, or to different signal levels in general. The signal path that generates the FPN should be in common for both states, i.e. pass through the same amplifying path in the pixel. Obvious variants are:
- Not limited to a simple pixel. An active pixel may be constructed so as to take its signal from different places and times, as e.g. from different photodiodes that may be shared with other active pixels, or from information that is acquired at different times. Such array is shown in figure 6 in a most simple form. Two pixels of an array are shown, only relevant parts of the pixels are shown: (81),(82) are photo detectors, (91), (92) are schematic representations of the amplifying part of the pixel.
- The switches (83), and (84) are closed and open respectively. Either one of the detectors (81) or (82)is tied to the amplifier (91) (and similarly for all other members of the array). The reference state for such a reading may be during the time that (81) is tied to (91), and the reading state is then during the time that (82) is tied to (91). Somewhere down the signal path the output of (91) is corrected using the amplifying circuit (5) as shown in figure 2. The function that is realised in this particular way is a spatio-temporal filter where the intensity at one pixel at one time is subtracted from the intensity of another pixel at another time. Several pixels in a neighbourhood could be tied at the same node, at the same or different times, thus realising more complex spatio-temporal filters. In principle the rectangles (81) and (82) may represent active pixels themselves, thus creating a hierarchic structure.
- An array may be different from the classic two-dimensional (rectangular) array. E.g. a linear array, a circular, a log-polar, even a random array is possible. If the technology allows so, a 3-dimensional array may become possible. The array could be made up of other types of detectors than optical detectors, as sensors for electro-magnetic radiation, elementary particles, pressure waves (sound), chemicals, ...
- In figures 2 & 5, the current source (12),(62) may be replaced by a resistor, or it may be combined with switch (28), (78) in one component (note that e.g. both a current source or a switch can be realized with a MOSFET)
- As mentioned before, second amplifier (11),(61) may be omitted (shunted). The circuit could be tuned to operate without second amplifier (11),(61) or it may include also filtering or a voltage offset which may contribute to a better operation (high speed, low noise, operation in required voltage range etc.).
- Switch (26), (76) in figures 2 & 5 may be replaced by a current source or a resistance or any device that can keep the source of (9),(59) at a certain voltage that must not be explicitly applied.
- In the above disclosure for simplicity it is supposed that the active pixels (1),(2),(3),(4),(51),(52),(53), (54) output is a voltage. In practice, an active pixel may output its signal via a transistor, of which the load is common for the bus, and resides outside the pixel. The transistor together with the external load element (being a passive component like a resistor, or an active component like a MOSFET), is a transistor amplifier, typically a source follower, an inverting amplifier, or a differential amplifier.
- It is obvious that active pixels (1),(2),(3),(4),(51),(52),(53),(54) which output a current instead of a voltage may be used as well. A current may be converted to a voltage over a resistor or a switched capacitor.
- It is obvious that, wherever MOSFETs are mentioned in this text, other types of controlled amplification devices can be thought, as far as they can realise the same functions, as bipolar transistors or J-FETs.
- As the difference between active pixel and passive pixel lies merely in the presence of an amplifying element in the pixel, the method may be applied to cancel the FPN of passive pixels too. For this purpose the charges of the passive pixel can first be converted.

It is possible to realise an FPN-free reading of an active pixel array in other ways:
- by reading the said two states separately and doing the subtraction outside the imaging device, in analog or in digital mode after AD-conversion. Such an approach requires a double readout speed, and some kind of analog or digital memory.
- by using other types of differential amplifiers at the column edges. The signals of the two states may be stored on a capacitor, and the differential amplifier read the difference. This is a viable way of reading the active pixel signal, and removing the FPN of the active pixels, but it does not cancel FPN that is generated in the differential amplifier itself.

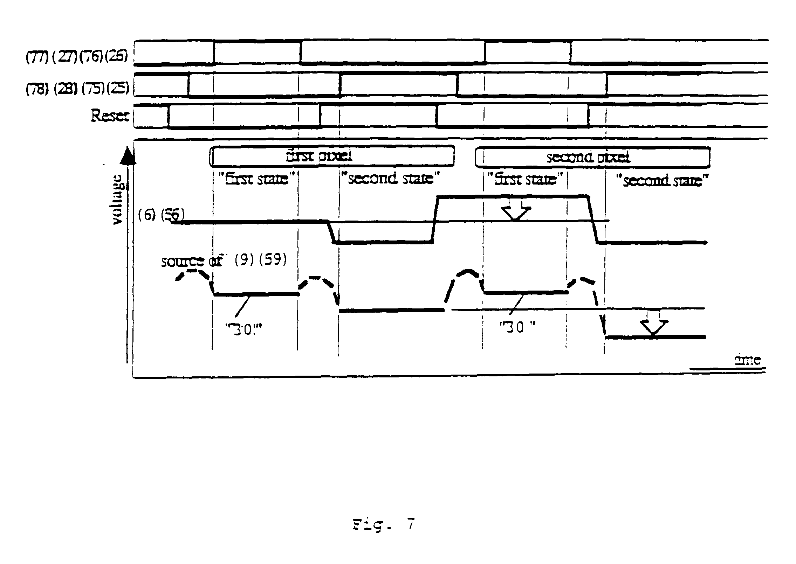

A timing scheme of the FPN elimination method according to the present invention is shown in figure 7. The signals to be expected at terminals of the preferred embodiments (see figures hereabove), while reading two pixels on the same column are shown. The shown applied binary signals are (77),(27),(76),(26),(78),(28) and (75),(25) (which are the same for simplicity; but in combination with a multiplexer (not drawn) (75), (25) is different from (78), (28), and Reset, which sets the pixel in a reset state or not (indicated as "first state" and "second state"). Two analog signals are shown: (6), (56), the voltage of the column line which reflects the output of the pixel(s) connected to it, and which is the input of the column amplifier (5),(55); and the voltage at the source of transistor (9), (59), which is the output of the column amplifier (5), (55). The white arrows indicate the difference of the resulting signal going from pixel (1) to pixel (2).

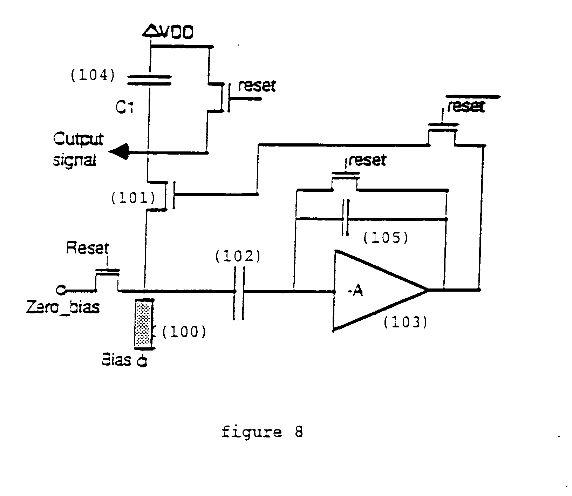

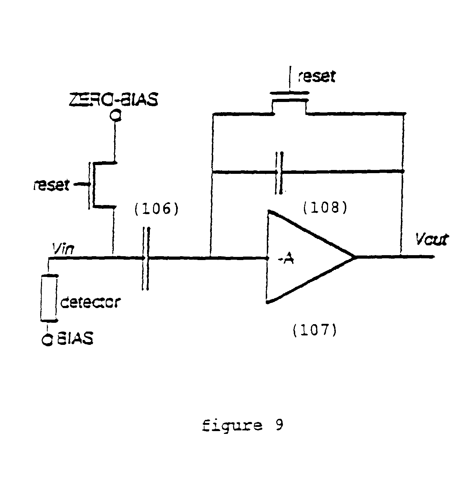

Another embodiment of the present invention is shown in figure 8. A pixel incorporating a photosensitive element and an amplifying circuit comprising an amplifying element (101) and a memory element (102) is shown. Furthermore shown are connections and circuits to adjust the signal in an output terminal of said amplifying element (101) to a known level, a measure of the corresponding level in a control terminal of said amplifying element being stored on said memory element. A prior art amplifying circuit is shown in figure 9.

The pixel shown in figure 9 advantageously is used in case the photo-current of a photosensitive element or a detector is readout by an amplifier (107) with capacitive feedback (108), which integrates this photo-current and gives an output voltage that is proportional to the photo-current and integration time. The integration time is determined by timing signals, the photo-current and an integration capacitor (108). Another (second) capacitor (106) is needed to allow the voltage (Bias minus zero-Bias) across the photo detector to be controlled in a precise way. Specific applications require such features for reasons of photometric performance. One operational disadvantage of the amplifying circuit of figure 9 is that, for good suppression of the parasitic effects at the input, the ratio of the capacitances of both capacitors (106) and (108) should be as large as possible. In some cases, this ratio should be larger than 1000. Yet for some applications, the capacitance of said integration capacitor (108) is 1 pF as imposed by the magnitude of photo detector current. Thus, the second capacitor (106) should be 1 nF in such cases. Such a large capacitor cannot be integrated on chip.

A new charge amplifying circuit making use of the present invention is therefore disclosed in figure 8.

In order to overcome the need of a large number of discrete capacitors in the circuit of figure 9, a pixel as shown in figure 8 is proposed. Here, an amplifying circuit based on the present invention is presented. Said amplifying circuit is referred to as the AC-coupled direct injection circuit (ACI). An AC-coupled amplifier in the feedback loop (103) is used to adjust the input mode of the amplifying element (101), preferably a MOSFET transistor. The photo-current is integrated on a third capacitor (104). The column amplifier of the present invention is used in combination with a photo receptor forming thus a pixel. As the capacitors in this embodiment may have small values, the circuit can be integrated easily on chip, as a single element or as pixel arrays. Another advantage of this circuit is that the variation and drift of the bias voltage across the photo receptor is very low.

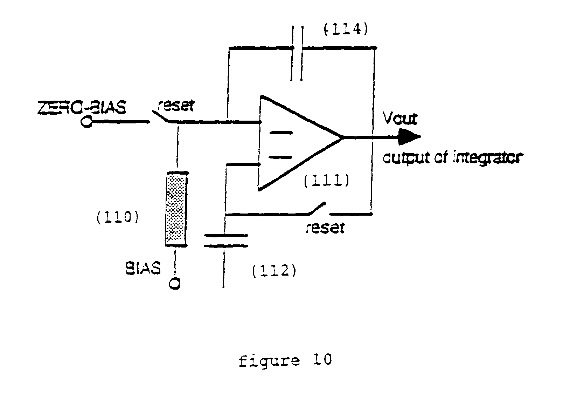

Another improvement of the AC-coupled transimpedance amplifier is shown in figure 10. This circuit is referred to as AC-regulated transimpedance amplifier (AR)

Here, the drawback of using a large second capacitor is solved by using an amplifying circuit according to the present invention. The memory element (112) is combined with a switch "reset". An amplifier (111) with an extra offset input is used as the feedback amplifier and at the same time as the amplifying element. The photo detector's current is integrated on the capacitor (114).

As a normal transimpedance amplifier configuration, the current is integrated on a feedback capacitor (114). Yet during reset, the zero-bias voltage is enforced on the amplifier's input (111) and the offset imbalance is stored on the capacitor (112).

The circuit as shown in figure 11 is an example of a differential amplifier with two negative and two positive input nodes which could be used in amplifier (111).

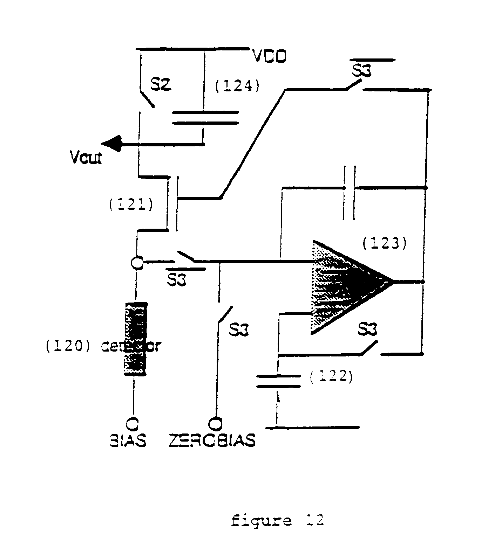

The circuits of figures 8 and 10 can be combined in one circuit. Such combined circuit (AC-regulated direct injection (ARI) circuit) is represented in figure 12. The memory element (122) is a capacitor in combination with a switch S3. The analog signal on this memory element is the input on an additional offset correcting input of a second amplifier (123) which in turn adjust the gate voltage of the amplifying element (121).

This circuit combines the following advantages:
- precise control of the BIAS-ZERO BIAS voltage over the photo detector,
- no need for large capacitor, the amplifier can be integrated on chip in combination with a photo receptor (120)

Advantageously, said pixels can be used in cryogenic readout amplifiers possibly in stressed GeGa detector arrays. For space applications and for low leakage applications, the Germanium-Gallium (Ge:Ga) detectors should be operated at 1.6 Kelvin, at a bias voltage of 20 mV. The closely coupled readout electronics should be operated at the same temperature and maintained this bias with an accuracy of 0.1 mV.

## Claims

1. An amplifying circuit (5), (55) comprising:
- an amplifying element (9), (59), (101), (111), (121) having an output terminal and a control terminal, and said amplifying element including a transistor;
- a memory element (10), (60), (102), (112), (122);
- and being characterised in that said amplifying circuit further comprises means for forcing an externally predetermined offset correction voltage directly on the output terminal of said amplifying element, and for adjusting a corresponding voltage level on the control terminal of said amplifying element, said corresponding voltage level being determined by said predetermined voltage and by said means, and said means further having a part for storing on said memory element said corresponding voltage level or a measure of said corresponding voltage level.

2. The amplifying circuit as recited in claim 1 wherein said externally predetermined voltage is directly forced on the output terminal through a switch or a resistor or a current source or a device that can keep the output terminal at said predetermined voltage.

3. The amplifying circuit as recited in claim 1 wherein said memory element is an analog memory element or a non-volatile memory element as used in analog EPROMS, EEPROMS or flash EEPROMS.

4. The amplifying circuit as recited in claim 3 wherein said memory element is a capacitor.

5. The amplifying circuit as recited in claim 1 wherein said means are an adjusting/forcing circuit.

6. The amplifying circuit as recited in claim 5 wherein said corresponding voltage level is indirectly adjusted on the control terminal of said amplifying element by circuit functioning of said means.

7. The amplifying circuit as recited in claim 1, wherein said amplifying element is a transistor, said output terminal being the source or drain of said transistor, and said control terminal being the gate of said transistor.

8. The amplifying circuit as recited in claim 7, wherein said transistor is a transistor of the type of metal oxide semiconductor transistors.

9. A pixel, adapted for integration in an imaging device, comprising the amplifying circuit as recited in claim 1 and further comprising a radiation sensitive element.

10. The pixel as recited in claim 9 further comprising an AC-coupled amplifier with a capacitive feedback circuit (103), (123) in between said amplifying element (101), (121) and said memory element (102), (122).

11. The pixel as recited in claim 9, wherein said amplifying element (111) has a first terminal being connected to said photosensitive element (110) and a control terminal being connected to said memory element (112), a second terminal of said amplifying element being connected through a capacitor (114) with said first terminal.

12. A device for imaging applications comprising the amplifying circuit (5),(55) as recited in claim 1 and further comprising:
- a matrix of active pixels (1,2,3,4), (51), (52), (53), (54) arranged in a geometric configuration, said pixels yielding electrical signal outputs generated by photoelectric conversion, and being adapted for being brought in a state corresponding to an amount of radiation collected on said pixels;
- at least one amplifying circuit (5), (55) being common to a group of pixels (1,2), (51), (52) of said matrix; and
- an output line (8), (58) being common to the matrix of pixels (1,2,3,4), (51), (52), (53), (54).

13. The device as recited in claim 12, wherein said matrix is arranged in columns and rows and wherein each amplifying circuit is common to a group of pixels such as a column or a row in said matrix.

14. The device as recited in Claim 13, wherein said predetermined level is common for essentially all columns of said matrix.

15. A method for reducing noise in a solid state imaging device having a group of active pixels, said method comprising the steps of:
- reading out the signal of a pixel (1) in a first state while forcing directly an externally predetermined offset correction voltage on the output terminal of an amplifying element (9) (59) that is connected to said pixel (1), thereby defining a corresponding voltage level on the control terminal of said amplifying element and storing said corresponding voltage level or a measure thereof on a memory element (10) (60) that is connected to said pixel, and thereby defining a first voltage at the output of said amplifying element (9) (59);
- subtracting said first voltage at the output of said amplifying element (9) (59) of a second voltage at the output of said amplifying element (9) (59), said second voltage being defined by the output signal of the same pixel in a second state and said second voltage including the voltage level stored on said memory element, whereby the output voltage of the amplifying element (9) shifts proportionally to the difference of the signal of said pixel (1) in said first and said second state;
- transferring the subtracted signal to an output line that is common for said group; and
- repeating this operation for all or part of pixels of the imaging device.

16. The method as recited in claim 15, wherein said externally predetermined voltage is directly forced on the output terminal through a switch or a resistor or a current source or a device that can keep the output terminal at said predetermined voltage.

17. The method as recited in claim 15, wherein said first and second state of said pixel are read out consecutively.

18. The method as recited in claim 15, wherein said first state or said second state corresponds to an amount of radiation or light collected on the light sensitive element in said pixel or to the dark condition of said pixel or to the reset state of said pixel.

19. The method as recited in any one of the claims 15-18, wherein said predetermined output voltage level is derived from a supply voltage of said solid state imaging device.

20. The method as recited in any one of the claims 15-19, wherein the voltage level stored on said memory element includes the offset voltage of said amplifying element.

21. Use of the circuit or pixel or device as recited in any one of the claims 1 to 14 or of the method as recited in any one of the claims 15 to 20 for a camera system.

## Patentansprüche

1. Verstärkerschaltung (5), (55), aufweisend:
- ein Verstärkungselement (9), (59), (101), (111), (121), das einen Ausgangsanschluß und einen Steueranschluß hat, wobei das Verstärkungselement einen Transistor umfaßt; und
- ein Speicherelement (10), (60), (102), (112), (122);
dadurch gekennzeichnet, daß die Verstärkerschaltung weiterhin Mittel aufweist, um eine extern vorgegebene Offset-Korrekturspannung direkt auf den Ausgangsanschluß des Verstärkungselements aufzuzwingen, und um ein entsprechendes Spannungsniveau an dem Steueranschluß des Verstärkungselements einzustellen, wobei das entsprechende Spannungsniveau durch die vorgegebene Spannung und durch die Mittel bestimmt wird, und die Mittel weiterhin einen Teil haben, um das entsprechende Spannungsniveau oder ein Maß des entsprechenden Spannungsniveaus auf dem Speicherelement zu speichern.

2. Verstärkerschaltung wie in Anspruch 1 angegeben, wobei die extern vorgegebene Spannung über einen Schalter oder einen Widerstand oder eine Stromquelle oder eine Vorrichtung, die den Ausgangsanschluß auf der vorgegebenen Spannung halten kann, auf den Ausgangsanschluß direkt aufgezwungen wird.

3. Verstärkerschaltung wie in Anspruch 1 angegeben, wobei das Speicherelement ein analoges Speicherelement oder ein Permanentspeicherelement ist, wie es in analogen EPROMS, EEPROMS oder Flash-EEPROMS verwendet wird.

4. Verstärkerschaltung wie in Anspruch 3 angegeben, wobei das Speicherelement ein Kondensator ist.

5. Verstärkerschaltung wie in Anspruch 1 angegeben, wobei die Mittel eine Einstell/Aufzwing-Schaltung sind.

6. Verstärkerschaltung wie in Anspruch 5 angegeben, wobei das entsprechende Spannungsniveau über die Schaltung der Mittel an dem Steueranschluß des Verstärkungselements indirekt eingestellt wird.

7. Verstärkerschaltung wie in Anspruch 1 angegeben, wobei das Verstärkungselement ein Transistor ist, und der Ausgangsanschluß der Source-Anschluß oder der Drain-Anschluß des Transistors ist, und der Steueranschluß der Gate-Anschluß des Transistors ist.

8. Verstärkerschaltung wie in Anspruch 7 angegeben, wobei der Transistor ein MOS-Transistor ist.

9. Pixel, ausgelegt für die Integration in eine Bilderzeugungsvorrichtung, das die in Anspruch 1 angegebene Verstärkerschaltung aufweist, und weiterhin ein strahlungsempfindliches Element aufweist.

10. Pixel wie in Anspruch 9 angegeben, das weiterhin einen WS-gekoppelten Verstärker mit einer kapazitiven Rückkopplungsschaltung (103), (123) zwischen dem Verstärkungselement (101), (121) und dem Speicherelement (102), (122) aufweist.

11. Pixel wie in Anspruch 9 angegeben, wobei das Verstärkungselement (111) einen ersten Anschluß hat, der mit dem lichtempfindlichen Element (110) verbunden ist, und einen Steueranschluß hat, der mit dem Speicherelement (112) verbunden ist, wobei der zweite Anschluß des Verstärkungselements über einen Kondensator (114) mit dem ersten Anschluß verbunden ist.

12. Vorrichtung für Bilderzeugungsanwendungen, die die in Anspruch 1 angegebene Verstärkerschaltung (5), (55) aufweist, und weiterhin aufweist:
- eine Matrix von aktiven Pixeln (1, 2, 3, 4), (51), (52), (53), (54), die in einer geometrischen Konfiguration angeordnet sind, wobei die Pixel elektrische Ausgangssignale liefern, die durch photoelektrische Umwandlung erzeugt werden, und die ausgelegt sind, um in einen Zustand gebracht zu werden, der einer auf den Pixeln gesammelten Strahlungsmenge entspricht:
- mindestens eine Verstärkerschaltung (5), (55), die für eine gesamte Gruppe von Pixeln (1, 2), (51), (52) der Matrix vorgesehen ist; und
- eine Ausgangsleitung (8), (58), die für die gesamte Matrix von Pixeln (1, 2, 3, 4), (51), (52), (53), (54) vorgesehen ist.

13. Vorrichtung wie in Anspruch 12 angegeben, wobei die Matrix in Spalten und Reihen angeordnet ist, und wobei jede Verstärkerschaltung für eine gesamte Gruppe von Pixeln, wie zum Beispiel eine Spalte oder eine Reihe der Matrix, vorgesehen ist.

14. Vorrichtung wie in Anspruch 13 angegeben, wobei das vorgegebene Niveau für im wesentlichen alle Spalten der Matrix vorgesehen ist.

15. Verfahren zur Verminderung des Rauschens bei einer Festkörper-Bilderzeugungsvorrichtung, die eine Gruppe von aktiven Pixeln hat, wobei das Verfahren die folgenden Schritte aufweist:
- Auslesen des Signals eines Pixels (1) in einem ersten Zustand, während eine extern vorgegebene Offset-Korrekturspannung auf den Ausgangsanschluß eines Verstärkungselements (9), (59), das an das Pixel (1) angeschlossen ist, direkt aufgezwungen wird, wodurch ein entsprechendes Spannungsniveau an dem Steueranschluß des Verstärkungselements definiert wird, und Speichern des entsprechenden Spannungsniveaus oder eines Maßes dafür auf einem Speicherelement (10), (60), das an das Pixel (1) angeschlossen ist, wodurch eine erste Spannung an dem Ausgang des Verstärkungselements (9), (59) definiert wird;
- Subtrahieren der ersten Spannung an dem Ausgang des Verstärkungselements (9), (59) von einer zweiten Spannung an dem Ausgang des Verstärkungselements (9), (59), wobei die zweite Spannung durch das Ausgangssignal desselben Pixels in einem zweiten Zustand definiert ist, und die zweite Spannung das auf dem Speicherelement gespeicherte Spannungsniveau umfaßt, wodurch die Ausgangsspannung des Verstärkungselements (9) proportional zu der Differenz des Signals des Pixels (1) in dem ersten und zweiten Zustand verschoben wird;
- Weiterleiten des subtrahierten Signals nach einer Ausgangsleitung, die für die gesamte Gruppe vorgesehen ist; und
- Wiederholen dieses Vorgangs für alle Pixel oder einen Teil der Pixel der Bilderzeugungsvorrichtung.

16. Verfahren wie in Anspruch 15 angegeben, wobei die extern vorgegebene Spannung über einen Schalter oder einen Widerstand oder eine Stromquelle oder eine Vorrichtung, die den Ausgangsanschluß auf der vorgegebenen Spannung halten kann, auf den Ausgangsanschluß direkt aufgezwungen wird.

17. Verfahren wie in Anspruch 15 angegeben, wobei der erste und zweite Zustand des Pixels nacheinander ausgelesen werden.

18. Verfahren wie in Anspruch 15 angegeben, wobei der erste Zustand oder zweite Zustand einer auf dem lichtempfindlichen Element in dem Pixel gesammelten Strahlungs- oder Lichtmenge, oder dem Dunkelzustand des Pixels, oder dem Rückstellzustand des Pixels entspricht.

19. Verfahren wie in irgendeinem der Ansprüche 15-18 angegeben, wobei das vorgegebene Ausgangsspannungsniveau von einer Versorgungsspannung der Festkörper-Bilderzeugungsvorrichtung abgeleitet ist.

20. Verfahren wie in irgendeinem der Ansprüche 15-19 angegeben, wobei das auf dem Speicherelement gespeicherte Spannungsniveau die Offset-Spannung des Verstärkungselements umfaßt.

21. Verwendung der Schaltung oder des Pixels oder der Vorrichtung, die in irgendeinem der Ansprüche 1 bis 14 angegeben wurden, oder des Verfahrens, das in irgendeinem der Ansprüche 15 bis 20 angegeben wurde, für ein Kamerasystem.

## Revendications

1. Circuit d'amplification (5), (55), comprenant :
- un élément d'amplification (9), (59), (101), (111), (121) ayant une borne de sortie et une borne de commande, ledit élément d'amplification comprenant un transistor;
- un élément de mémoire (10), (60), (102), (112), (122);
- et étant caractérisé en ce que ledit circuit d'amplification comprend par ailleurs des moyens pour imposer une tension de correction décalée prédéterminée de l'extérieur directement à la borne de sortie dudit élément d'amplification, et pour ajuster un niveau de tension correspondant sur la borne de commande dudit élément d'amplification, ledit niveau de tension correspondant étant déterminé par ladite tension prédéterminée et par lesdits moyens, et lesdits moyens ayant par ailleurs une partie pour stocker dans ledit élément de mémoire ledit niveau de tension correspondant ou une mesure dudit niveau de tension correspondant.

2. Circuit d'amplification selon la revendication 1, dans lequel ladite tension prédéterminée de l'extérieur est imposée directement à la borne de sortie par l'intermédiaire d'un commutateur ou d'une résistance ou d'une source de courant ou d'un dispositif qui peut maintenir la borne de sortie à ladite tension prédéterminée.

3. Circuit d'amplification selon la revendication 1, dans lequel ledit élément de mémoire est un élément de mémoire analogique ou un élément de mémoire rémanent tel qu'utilisé dans des EPROM, des EEPROM ou des EEPROM éclairs analogiques.

4. Circuit d'amplification selon la revendication 3, dans lequel ledit élément de mémoire est un condensateur.

5. Circuit d'amplification selon la revendication 1, dans lequel lesdits moyens sont formés d'un circuit d'ajustement/imposition.

6. Circuit d'amplification selon la revendication 5, dans lequel ledit niveau de tension correspondant est ajusté indirectement sur la borne de commande dudit élément d'amplification par fonctionnement desdits moyens dans le circuit.

7. Circuit d'amplification selon la revendication 1, dans lequel ledit élément d'amplification est un transistor, ladite borne de sortie est la source ou le drain dudit transistor, et ladite borne de commande est la grille dudit transistor.

8. Circuit d'amplification selon la revendication 7, dans lequel ledit transistor est un transistor du type des transistors à semi-conducteurs d'oxydes métalliques.

9. Pixel destiné à être intégré dans un dispositif d'imagerie, comprenant le circuit d'amplification selon la revendication 1 et comprenant par ailleurs un élément sensible aux rayonnements.

10. Pixel selon la revendication 9, comprenant par ailleurs un amplificateur couplé en CA avec un circuit de rétroaction capacitif (103), (123) entre ledit élément d'amplification (101), (121) et ledit élément de mémoire (102), (122).

11. Pixel selon la revendication 9, dans lequel ledit élément d'amplification (111) a une première borne qui est connectée audit élément photosensible (110) et une borne de commande qui est connectée audit élément de mémoire (112), une seconde borne dudit élément d'amplification étant connectée à ladite première borne par l'entremise d'un condensateur (114).

12. Dispositif destiné à des applications d'imagerie, comprenant le circuit d'amplification (5), (55) selon la revendication 1 et comprenant par ailleurs :
- une matrice de pixels actifs (1,2,3,4), (51), (52), (53), (54) agencés en configuration géométrique, lesdits pixels fournissant des sorties de signaux électriques générées par conversion photoélectrique, et étant à même d'être amenés dans un état correspondant à une quantité de rayonnement recueillie sur lesdits pixels;
- au moins un circuit d'amplification (5), (55) commun à un groupe de pixels (1,2), (51), (52) de ladite matrice; et
- une ligne de sortie (8), (58) commune à la matrice de pixels (1,2,3,4), (51), (52), (53), (54).

13. Dispositif selon la revendication 12, dans lequel ladite matrice est agencée en colonnes et en rangées et dans lequel chaque circuit d'amplification est commun à un groupe de pixels, tel qu'une colonne ou une rangée de ladite matrice.

14. Dispositif selon la revendication 13, dans lequel ledit niveau prédéterminé est commun à essentiellement toutes les colonnes de ladite matrice.

15. Procédé pour réduire le bruit dans un dispositif d'imagerie à semi-conducteur ayant un groupe de pixels actifs, ledit procédé comprenant les étapes consistant :
- à lire le signal d'un pixel (1) dans un premier état tout en imposant directement une tension de correction décalée prédéterminée de l'extérieur à la borne de sortie d'un élément d'amplification (9), (59) qui est connecté audit pixel (1), à définir ainsi un niveau de tension correspondant sur la borne de commande dudit élément d'amplification et à stocker ledit niveau de tension correspondant ou une mesure de ce niveau dans un élément de mémoire (10), (60) qui est connecté audit pixel, et à définir ainsi une première tension à la sortie dudit élément d'amplification (9), (59);
- à soustraire ladite première tension à la sortie dudit élément d'amplification (9), (59) d'une seconde tension à la sortie dudit élément d'amplification(9), (59), ladite seconde tension étant définie par le signal de sortie du même pixel dans un second état et ladite seconde tension comprenant le niveau de tension stocké dans ledit élément de mémoire, de telle sorte que la tension de sortie de l'élément d'amplification (9) se décale proportionnellement à la différence du signal dudit pixel (1) dans lesdits premier et second états;
- à transférer le signal soustrait à une ligne de sortie qui est commune audit groupe; et
- à répéter cette opération pour tout ou partie des pixels du dispositif d'imagerie.

16. Procédé selon la revendication 15, dans lequel ladite tension prédéterminée de l'extérieur est imposée directement à la borne de sortie par l'intermédiaire d'un commutateur ou d'une résistance ou d'une source de courant ou d'un dispositif qui peut maintenir la borne de sortie à ladite tension prédéterminée.

17. Procédé selon la revendication 15, dans lequel lesdits premier et second états dudit pixel sont lus consécutivement.

18. Procédé selon la revendication 15, dans lequel ledit premier état ou ledit second état correspond à une quantité de rayonnement ou de lumière recueillie sur l'élément photosensible dans ledit pixel ou à l'état obscur dudit pixel ou à l'état remis à zéro dudit pixel.

19. Procédé selon l'une quelconque des revendications 15 à 18, dans lequel ledit niveau de tension de sortie prédéterminé est dérivé d'une tension d'alimentation dudit dispositif d'imagerie à semi-conducteur.

20. Procédé selon l'une quelconque des revendications 15 à 19, dans lequel le niveau de tension stocké dans l'élément de mémoire comprend la tension décalée'dudit élément d'amplification.

21. Utilisation du circuit ou du pixel ou du dispositif selon l'une quelconque des revendications 1 à 14 ou du procédé selon l'une quelconque des revendications 15 à 20 pour un système de caméra.
